# EUROPÄISCHE PATENTSCHRIFT

(11) **EP 2 673 864 B1**
(45) Veröffentlichungstag und Bekanntmachung des Hinweises auf die Patenterteilung: **23.03.2016**
(21) Anmeldenummer: 11808657.8
(22) Anmeldetag: 29.12.2011
(51) Int. Cl.: H02J 7/14, H02J 7/02, H02J 7/00, B60L 11/18

(54) **SYSTEM ZUM LADEN EINES ENERGIESPEICHERS UND VERFAHREN ZUM BETRIEB DES LADESYSTEMS**
SYSTEM FOR CHARGING AN ENERGY STORE, AND METHOD FOR OPERATING THE CHARGING SYSTEM
SYSTÈME DE CHARGE D'UN ACCUMULATEUR D'ÉNERGIE ET PROCÉDÉ DE FONCTIONNEMENT DU SYSTÈME DE CHARGE

(30) Priorität: 09.02.2011 DE 102011003869
(43) Veröffentlichungstag der Anmeldung: 18.12.2013
(73) Patentinhaber: Robert Bosch GmbH, 70442 Stuttgart (DE)
(72) Erfinder: FEUERSTACK, Peter, 71642 Ludwigsburg (DE); WEISSENBORN, Erik, 70374 Stuttgart (DE); KESSLER, Martin, 73527 Schwaebisch Gmuend (DE)
(86) Internationale Anmeldenummer: PCT/EP2011/074216
(87) Internationale Veröffentlichungsnummer: WO 2012/107146

(56) Entgegenhaltungen:
- DE-A1- 19 736 414
- US-A- 5 341 075
- US-B1- 7 782 015

## Beschreibung

Die Erfindung betrifft ein System zum Laden eines Energiespeichers und ein Verfahren zum Betrieb des erfindungsgemäßen Ladesystems.

### Stand der Technik

Es zeichnet sich ab, dass in Zukunft sowohl bei stationären Anwendungen, wie z.B. Windkraftanlagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren. In herkömmlichen Anwendungen wird eine elektrische Maschine, welche z.B. als Drehfeldmaschine ausgeführt ist, über einen Umrichter in Form eines Wechselrichters gesteuert. Kennzeichnend für derartige Systeme ist ein sogenannter Gleichspannungszwischenkreis, über welchen ein Energiespeicher, in der Regel eine Batterie, an die Gleichspannungsseite des Wechselrichters angeschlossen ist. Um die für eine jeweilige Anwendung gegebenen Anforderungen an Leistung und Energie erfüllen zu können, werden mehrere Batteriezellen in Serie geschaltet. Da der von einem derartigen Energiespeicher bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen.

Die Serienschaltung mehrerer Batteriezellen bringt neben einer hohen Gesamtspannung das Problem mit sich, dass der gesamte Energiespeicher ausfällt, wenn eine einzige Batteriezelle ausfällt, weil dann kein Batteriestrom mehr fließen kann. Ein solcher Ausfall des Energiespeichers kann zu einem Ausfall des Gesamtsystems führen. Bei einem Fahrzeug kann ein Ausfall der Antriebsbatterie zum "Liegenbleiben" des Fahrzeugs führen. Bei anderen Anwendungen, wie z.B. der Rotorblattverstellung von Windkraftanlagen, kann es bei ungünstigen Rahmenbedingungen, wie z.B. starkem Wind, sogar zu sicherheitsgefährdenden Situationen kommen. Daher ist stets eine hohe Zuverlässigkeit des Energiespeichers anzustreben, wobei mit "Zuverlässigkeit" die Fähigkeit eines Systems bezeichnet wird, für eine vorgegebene Zeit fehlerfrei zu arbeiten. In den älteren Anmeldungen DE 10 2010 027857 und DE 10 2010 027861 sind Batterien mit mehreren Batteriemodulsträngen beschrieben, welche direkt an eine elektrische Maschine anschließbar sind. Die Batteriemodulstränge weisen dabei eine Mehrzahl von in Serie geschalteten Batteriemodulen auf, wobei jedes Batteriemodul mindestens eine Batteriezelle und eine zugeordnete steuerbare Koppeleinheit aufweist, welche es erlaubt in Abhängigkeit von Steuersignalen den jeweiligen Batteriemodulstrang zu unterbrechen oder die jeweils zugeordnete mindestens eine Batteriezelle zu überbrücken oder die jeweils zugeordnete mindestens eine Batteriezelle in den jeweiligen Batteriemodulstrang zu schalten. Durch geeignete Ansteuerung der Koppeleinheiten, z. B. mit Hilfe von Pulsweitenmodulation, können auch geeignete Phasensignale zur Steuerung der elektrischen Maschine bereitgestellt werden, so dass auf einen separaten Pulswechselrichter verzichtet werden kann. Der zur Steuerung der elektrischen Maschine erforderliche Pulswechselrichter ist damit sozusagen in die Batterie integriert. Zum Zwecke der Offenbarung werden diese beiden älteren Anmeldungen vollumfänglich in die vorliegende Anmeldung einbezogen.

US 5,341,075 A (vergl. den Oberbegriff des Anspruchs 1) offenbart ein System zum Aufladen einer Batterie und zum Ansteuern eines Motors. Hierzu wird eine Wechselspannung von einer externen Quelle bereitgestellt. Diese Wechselspannung wird über die Schaltelemente des Wechselrichters einer Motorsteuerung der Batterie zugeführt.

US 7,782,015 B1 offenbart ein System und ein Verfahren zum Bereitstellen elektrischer Energie. An einem Wechselrichter wird die elektrische Energie durch eine erste und eine zweite Batterieeinheit bereitgestellt. Die Batterieeinheiten werden daraufhin abwechselnd mit einer Last verbunden.

### Offenbarung der Erfindung

Die vorliegende Erfindung schafft ein System zum Laden mindestens einer Energiespeicherzelle mit den Merkmalen des unabhängigen Patenanspruchs 1.

Die Erfindung schafft außerdem ein Verfahren zum Betreiben eines erfindungsgemäßen Ladesystems, wobei Energiespeicherzellen in allen Energieversorgungszweigen gleichzeitig geladen werden.

### Vorteile der Erfindung

Die Erfindung basiert auf der Grundidee, zur Ladung der Energiespeicherzellen die Energieversorgungszweige ohne die Zwischenschaltung einer zusätzlichen Ladungskomponente elektrisch mit einer externen Energiequelle zu verbinden. Die Verbindung kann erfolgt dabei entweder mittelbar über den Sternpunkt der elektrischen Maschine.

Neben der Einsparung zusätzlicher Ladungskomponenten zeichnet sich das erfindungsgemäße System dadurch aus, dass ein gleichzeitiges Laden von Energiespeicherzellen in allen Energieversorgungszweigen, insbesondere sogar ein gleichzeitiges Laden aller Energiespeicherzellen des steuerbaren Energiespeichers, bei individuell durch den steuerbaren Energiespeicher einstellbaren Ladeströmen möglich ist.

Gemäß einer Ausführungsform der Erfindung ist die externe Energiequelle, welche mit dem Sternpunkt der elektrischen Maschine verbindbar ist, als Stromquelle ausgestaltet. Die Ausgestaltung als Stromquelle bietet den Vorteil, dass diese ohne weitere Maßnahmen parallel zu dem als Spannungsquelle wirkenden steuerbaren Energiespeicher geschaltet werden kann, da der Ladestrom durch die Stromquelle automatisch begrenzt wird.

Alternativ kann die externe Energiequelle, welche mit dem Sternpunkt der elektrischen Maschine verbindbar ist, aber auch als Spannungsquelle ausgestaltet sein, deren Spannungswert unterhalb der Spannungen der Energieversorgungszweige liegt. Da der Ladestrom durch die Spannungsquelle nicht automatisch begrenzt wird, kann diese aber nicht ohne weiteres parallel zu dem als Spannungsquelle wirkenden steuerbaren Energiespeicher geschaltet werden. Dieses Problem wird aber dadurch gelöst, dass die Koppeleinheiten in Verbindung mit Motorinduktivitäten der elektrischen Maschine als Hochsetzsteller betreibbar sind. In Verbindung mit einem Hochsetzsteller erlangt eine Spannungsquelle aber "Stromquellen-Charakter", so dass auch bei Verwendung einer Spannungsquelle als externem Energiespeicher keine zusätzliche Ladekomponente erforderlich ist.

Sind die Induktivitäten der Statorwicklungen der elektrischen Maschine nicht ausreichend, so kann zwischen die Ladeeinrichtung und die elektrische Maschine oder zwischen die Ladeeinrichtung und den steuerbaren Energiespeicher eine zusätzliche Ladeinduktivität geschaltet sein.

Weist die elektrische Maschine mindestens zwei Phasen und damit der steuerbare Energiespeicher mindestens zwei parallele Energieversorgungszweige auf, so ist eine Verteilung eines durch die Spannungsquelle eingespeisten Stromes auf die Energieversorgungszweige über die Spannungen der Energieversorgungszweige einstellbar. Die Spannungen der Energieversorgungszweige sind dabei durch die Anzahl der in den jeweiligen Energieversorgungszweig geschalteten Energiespeicherzellen festgelegt. Mit Hilfe der Koppeleinheiten des steuerbaren Energiespeichers lässt sich somit der Ladestrom in den einzelnen Energieversorgungszweigen individuell einstellen.

Gemäß einer Ausführungsform der Erfindung ist die Energiequelle, welche mit dem Sternpunkt der elektrischen Maschine verbindbar ist, als Gleichspannungsquelle oder Gleichstromquelle ausgestaltet. Sind die Koppeleinheiten des steuerbaren Energiespeichers aber als Vollbrücken ausgelegt, so kann die Energiequelle alternativ auch als Wechselspannungsquelle oder Wechselstromquelle ausgestaltet sein.

Unerwünschte Momente während des Ladevorgangs können adurch vermieden werden, dass die elektrische Maschine während des Ladevorgangs mechanisch blockiert wird, z.B. mit Hilfe einer Getriebesperrklinke. Alternativ kann auch die Rotorlage der elektrischen Maschine überwacht werden, z.B. mit Hilfe einer entsprechenden Sensorik, und im Falle einer detektierten Rotorbewegung abgeschaltet werden.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung einer ersten Ausführungsform eines erfindungsgemäßen Ladesystems,
- Fig. 2: eine schematische Darstellung einer zweiten Ausführungsform eines erfindungsgemäßen Ladesystems in einer Ladephase und
- Fig. 3: das Ladesystem gemäß Fig. 2 in einer Freilaufphase.

Ausführungsformen der Erfindung

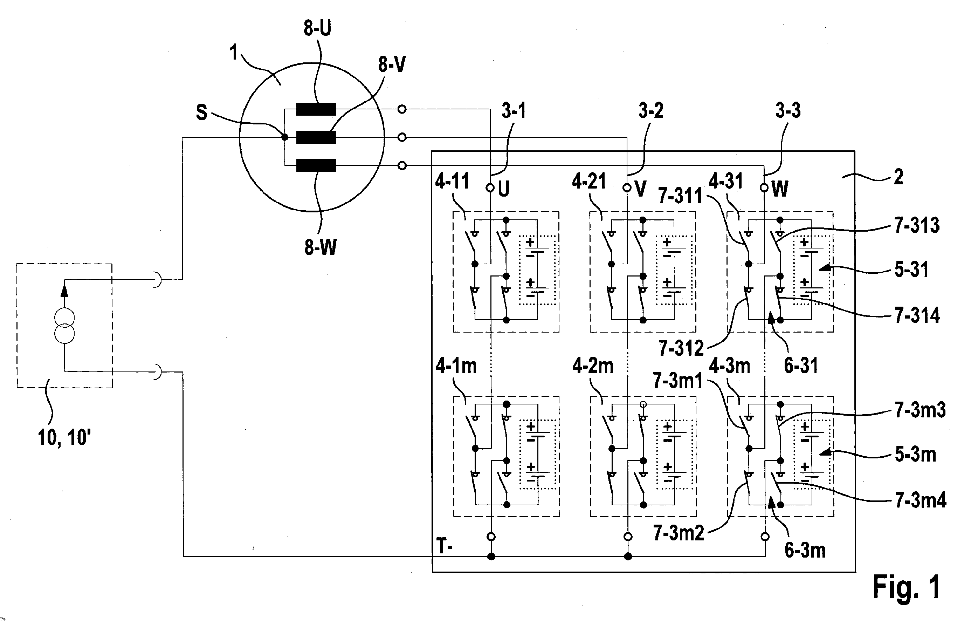

Die Figuren 1 bis 3 zeigen schematische Darstellungen von Ausführungsformen eines erfindungsgemäßen Ladesystems. An eine dreiphasige elektrische Maschine 1 ist ein steuerbarer Energiespeicher 2 angeschlossen. Der steuerbare Energiespeicher 2 umfasst drei Energieversorgungszweige 3-1, 3-2 und 3-3, welche einerseits mit einem Bezugspotential T- (Bezugsschiene), welches in den dargestellten Ausführungsformen ein niedriges Potential führt, und andererseits jeweils mit einzelnen Phasen U, V, W der elektrischen Maschine 1 verbunden sind. Jeder der Energieversorgungszweige 3-1, 3-2 und 3-3 weist m in Reihe geschaltete Energiespeichermodule 4-11 bis 4-1 m bzw. 4-21 bis 4-2m bzw. 4-31 bis 4-3m auf, wobei m ≥ 2. Die Energiespeichermodule 4 wiederum umfassen jeweils mehrere in Reihe geschaltete elektrische Energiespeicherzellen, welche aus Gründen der Übersichtlichkeit lediglich in dem mit der Phase W der elektrischen Maschine 1 verbundenen Energieversorgungszweig 3-3 mit Bezugszeichen 5-31 bis 5-3m versehen sind. Die Energiespeichermodule 4 umfassen des Weiteren jeweils eine Koppeleinheit, welche den Energiespeicherzellen 5 des jeweiligen Energiespeichermoduls 4 zugeordnet ist. Aus Gründen der Übersichtlichkeit sind auch die Koppeleinheiten lediglich in dem Energieversorgungszweig 3-3 mit Bezugszeichen 6-31 bis 6-3m versehen. In den dargestellten Ausführungsvarianten werden die Koppeleinheiten 6 jeweils durch vier steuerbare Schaltelemente 7-311, 7-312, 7-313 und 7-314 bis 7-3m1, 7-3m2, 7-3m3 und 7-3m4 gebildet, welche in Form einer Vollbrücke verschaltet sind. Die Schaltelemente können dabei als Leistungshalbleiterschalter, z.B. in Form von IGBTs (Insulated Gate Bipolar Transistors) oder als MOSFETs (Metal Oxide Semiconductor Field-Effect Transistors), ausgeführt sein.

Die Koppeleinheiten 6 ermöglichen es, den jeweiligen Energieversorgungszweig 3, durch Öffnen aller Schaltelemente 7 einer Koppeleinheit 6 zu unterbrechen. Alternativ können die Energiespeicherzellen 5 durch Schließen von jeweils zwei der Schaltelemente 7 einer Koppeleinheit 6 entweder überbrückt werden, z.B. Schließen der Schalter 7-312 und 7-314 oder in den jeweiligen Energieversorgungszweig 3 geschaltet werden, z.B. Schließen der Schalter 7-312 und 7-313.

Die Gesamt-Ausgangsspannungen der Energieversorgungszweige 3-1 bis 3-3 werden bestimmt durch den jeweiligen Schaltzustand der steuerbaren Schaltelemente 7 der Koppeleinheiten 6 und können stufig eingestellt werden. Die Stufung ergibt sich dabei in Abhängigkeit von der Spannung der einzelnen Energiespeichermodule 4. Geht man von der bevorzugten Ausführungsform gleichartig ausgestalteter Energiespeichermodule 4 aus, so ergibt sich eine maximal mögliche Gesamt-Ausgangsspannung aus der Spannung eines einzelnen Energiespeichermoduls 4 mal der Anzahl m der pro Energieversorgungszweig 3 in Reihe geschalteten Energiespeichermodule 4.

Die Koppeleinheiten 6 erlauben es damit, die Phasen U, V, W der elektrischen Maschine 1 entweder gegen ein hohes Bezugspotential oder ein niedriges Bezugspotential zu schalten und können insofern auch die Funktion eines bekannten Wechselrichters erfüllen. Damit können Leistung und Betriebsart der elektrischen Maschine 1 bei geeigneter Ansteuerung der Koppeleinheiten 6 durch den steuerbaren Energiespeicher 2 gesteuert werden. Der steuerbare Energiespeicher 2 erfüllt also insofern eine Doppelfunktion, da er einerseits der elektrischen Energieversorgung andererseits aber auch der Steuerung der elektrischen Maschine 1 dient.

Die elektrische Maschine 1 weist Statorwicklungen 8-U, 8-V und 8-W auf, die in bekannter Weise in Sternschaltung miteinander verschaltet sind.

Die elektrische Maschine 1 ist in den dargestellten Ausführungsbeispielen als dreiphasige Drehstrommaschine ausgeführt, kann aber auch weniger oder mehr als drei Phasen aufweisen. Nach der Phasenanzahl der elektrischen Maschine richtet sich natürlich auch die Anzahl der Energieversorgungszweige 3 in dem steuerbaren Energiespeicher 2.

In den dargestellten Ausführungsbeispielen weist jedes Energiespeichermodul 4 jeweils mehrere in Reihe geschaltete Energiespeicherzellen 5 auf. Die Energiespeichermodule 4 können aber alternativ auch jeweils nur eine einzige Energiespeicherzelle oder auch parallel geschaltete Energiespeicherzellen aufweisen.

In den dargestellten Ausführungsbeispielen werden die Koppeleinheiten 6 jeweils durch vier steuerbare Schaltelemente 7 in Form einer Vollbrücke gebildet, was auch die Möglichkeit einer Spannungsumkehr am Ausgang des Energiespeichermoduls bietet. Die Koppeleinheiten 6 können aber auch durch mehr oder weniger steuerbare Schaltelemente realisiert sein, solange die notwendigen Funktionen (Überbrücken der Energieversorgungszellen und Schalten der Energieversorgungszellen in den Energieversorgungszweig) realisierbar sind. Insbesondere können die Koppeleinheiten auch in Form von Hallbrücken ausgebildet sein. Derartige Ausführungsformen ergeben sich beispielhaft aus den älteren Anmeldungen DE 10 2010 027857 und DE 10 2010 027861.

Um die Ladung von Energiespeicherzellen 5 eines oder mehrerer Energiespeichermodule 4 zu ermöglichen, wird eine als Stromquelle 10' ausgestaltete externe Energiequelle 10 einerseits mit einem Sternpunkt der S der elektrischen Maschine 1 und andererseits mit der Bezugsschiene T- verbunden. Die Stromquelle 10' kann dabei als Gleichstromquelle oder bei der dargestellten Ausgestaltung der Koppeleinheiten 6 als Vollbrücken auch als Wechselstromquelle ausgeführt sein und stellt einen zum Laden der Energiespeicherzellen 5 geeigneten Ladestrom zur Verfügung.

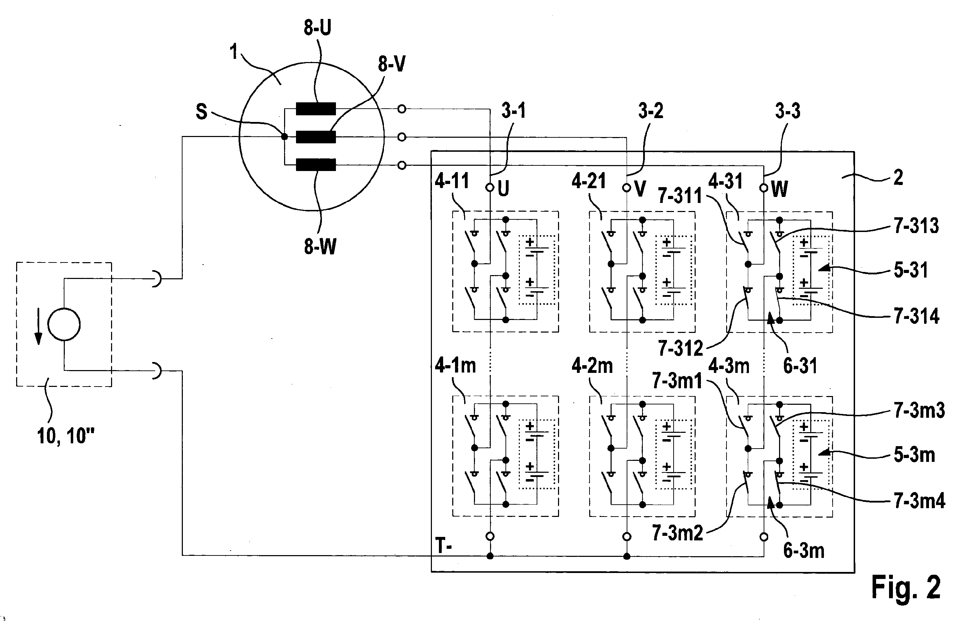

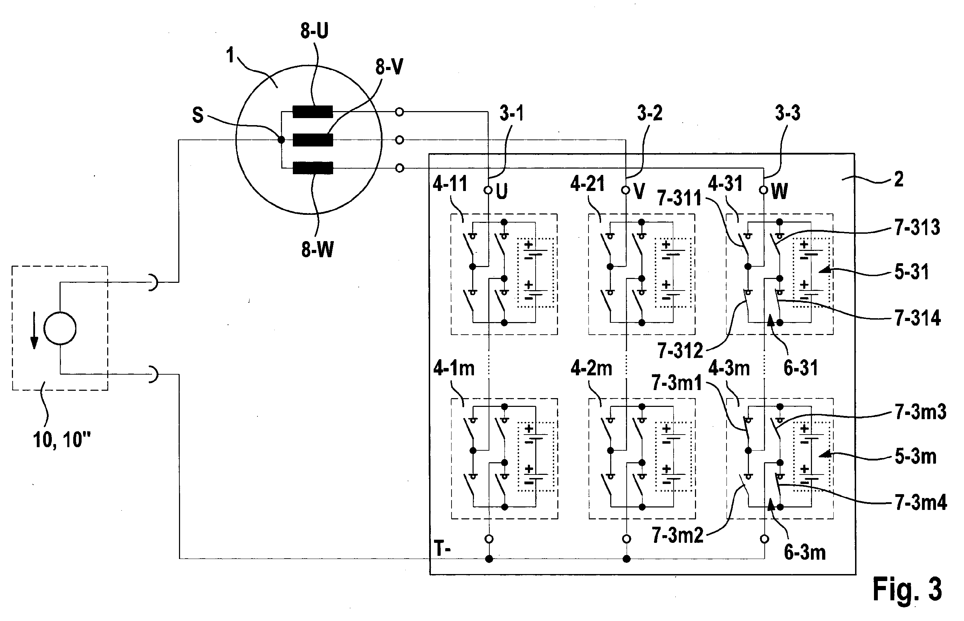

Die Figuren 2 und 3 zeigen eine zweite Ausführungsform der Erfindung. Diese unterscheidet sich von der ersten Ausführungsform dadurch, dass die externe Energiequelle 10 nicht als Stromquelle, sondern als Spannungsquelle 10" ausgestaltet ist, deren Spannungswert unterhalb der Spannungen der Energieversorgungszweige 3-1 bis 3-3 liegt. Die Spannungsquelle 10" kann dabei als Gleichspannungsquelle oder bei der dargestellten Ausgestaltung der Koppeleinheiten 6 als Vollbrücken auch als Wechselspannungsquelle ausgeführt sein. Um auch im Falle einer Spannungsquelle 10" einen zum Laden der Energiespeicherzellen 5 geeigneten Ladestrom zur Verfügung stellen zu können, muss der Ladevorgang dabei in zwei Phasen erfolgen, was im Folgenden exemplarisch für den Ladevorgang der Energiespeicherzellen 5 eines einzelnen Energiespeichermoduls 4, nämlich der Energiespeicherzellen 5-3m des Energiespeichermoduls 4-3m in dem Energieversorgungszweig 3-3, mit Hilfe einer als Gleichspannungsquelle ausgestalteten Spannungsquelle 10" beschrieben wird. Dabei werden die Koppeleinheiten 6 in Verbindung mit den Motorinduktivitäten 8 der elektrischen Maschine 1 als Hochsetzsteller betrieben.

Während einer Ladephase, welche in Fig. 2 dargestellt ist, werden die Koppeleinheiten 6-31 bis 6-3m der Energiespeichermodule 4-31 bis 4-3m, welche in dem Energieversorgungszweig 3-3 liegen, in welchem auch die zu ladenden Energiespeicherzellen 5-31 liegen, durch eine nicht dargestellte Steuereinheit derart gesteuert, dass die jeweils zugeordneten Energiespeicherzellen 5-31 bis 5-3m überbrückt werden. Dies wird konkret dadurch erreicht, dass die Schaltelemente 7-312 und 7-314 bis 7-3m2 und 7-3m4 geschlossen werden, wohingegen die Schaltelemente 7-311 und 7-313 bis 7-3m1 und 7-3m3 geöffnet werden. Alle übrigen Koppeleinheiten 6, das heißt alle Koppeleinheiten 6 in den Energiespeichermodulen 4 der anderen beiden Energieversorgungszweige 3-1 und 3-2 werden derart gesteuert, dass die jeweiligen Energieversorgungszweige 3-1 bzw. 3-2 unterbrochen werden. Konkret wird dies dadurch erreicht, dass jeweils alle Schaltelemente 7 der Koppeleinheiten 6 geöffnet werden.

Eine derartige Ansteuerung der Koppeleinheiten 6 bewirkt einen Stromfluss durch die Statorwicklung 8-W, so dass während der Ladephase elektrische Energie in der Statorwicklung 8-W gespeichert wird.

In einer der Ladephase folgenden Freilaufphase, welche in Fig. 3 dargestellt ist, wird die Koppeleinheit 6-3m, welche den zu ladenden Energiespeicherzellen 5-3m zugeordnet ist, derart gesteuert, dass die zugeordneten Energiespeicherzellen 5-3m in den Energieversorgungszweig 3-3 geschaltet werden. Dies wird konkret dadurch erreicht, dass die Schaltelemente 7-3m2 und 7-3m3 geöffnet und die Schaltelemente 7-3m1 und 7-3m4 geschlossen werden. Alle übrigen Koppeleinheiten 6-31 bis 6-3(m-1), welche in dem Energieversorgungszweig 3-3 der zu ladenden Energiespeicherzellen 5-3m liegen, die selbst aber keinen zu ladenden Energiespeicherzellen 5 zugeordnet sind, werden derart gesteuert, dass die jeweils zugeordneten Energiespeicherzellen 5-31 bis 5-3(m-1) überbrückt werden (Schließen der Schaltelemente 7-312 und 7-314 bis 7-3(m-1)2 bis 7-3(m-1)4 und Öffnen der Schaltelemente 7-311 und 7-313 bis 7-3(m-1)1 bis 7-3(m-1)3. Die Koppeleinheiten 6-11 bis 6-1 m und 6-21 bis 6-2m in den übrigen Energieversorgungszweigen 3-1 und 3-2 werden weiterhin derart gesteuert, dass die jeweiligen Energieversorgungszweige 3-1 und 3-2 unterbrochen werden.

Eine derartige Steuerung der Koppeleinheiten 6 bewirkt eine elektrische Verbindung der Statorwicklung 8-W mit den zu ladenden Energiespeicherzellen 5-3m. Die Induktivität der Statorwicklung 8-W treibt dabei den Strom weiter und lädt auf diese Weise die Energiespeicherzellen 5-3m auf.

Reichen die Motorinduktivitäten nicht aus, kann eine zusätzliche externe Ladeinduktivität eingesetzt werden, welche zwischen den Sternpunkt S und die elektrische Maschine 1 geschaltet wird.

Auf die beschriebene Weise können grundsätzlich alle Energiespeicherzellen 5 in allen Energieversorgungszweigen 3 des steuerbaren Energiespeichers 2 geladen werden. Mit den erfindungsgemäßen System ist es aber durch entsprechende Ansteuerung der Koppeleinheiten 6 auch möglich, mehrere Energiespeicherzellen 5 in mehreren Energieversorgungszweigen 3 oder sogar alle Energiespeicherzellen 5 gleichzeitig zu laden. Eine Verteilung eines durch die Energiequelle 10 eingespeisten Stromes auf die einzelnen Energieversorgungszweige 3 ist dabei über die Spannungen der Energieversorgungszweige 3 einstellbar. Die Spannungen der Energieversorgungszweige 3 wiederum werden dabei durch die Anzahl der in den jeweiligen Energieversorgungszweig 3 geschalteten Energiespeicherzellen 5 festgelegt.

Unerwünschte Momente während des Ladevorgangs können dadurch vermieden werden, dass die elektrische Maschine 1 während des Ladevorgangs mechanisch blockiert wird, z.B. mit Hilfe einer Getriebesperrklinke. Alternativ kann auch die Rotorlage der elektrischen Maschine 1 überwacht werden, z.B. mit Hilfe einer entsprechenden Sensorik, und im Falle einer detektierten Rotorbewegung abgeschaltet werden.

## Patentansprüche

1. System zum Laden mindestens einer Energiespeicherzelle (5) in einem steuerbaren Energiespeicher (2), welcher der Steuerung und der elektrischen Energieversorgung einer n-phasigen elektrischen Maschine (1), mit n ≥ 1, dient,
**dadurch gekennzeichnet, dass**
- der steuerbare Energiespeicher (2) n parallele Energieversorgungszweige (3-1, 3-2, 3-3) aufweist, welche
▪ jeweils mindestens zwei in Reihe geschaltete Energiespeichermodule (4) aufweisen, welche jeweils mindestens eine elektrische Energiespeicherzelle (5) mit einer zugeordneten steuerbaren Koppeleinheit (6) umfassen,
▪ einerseits mit einer Bezugsschiene (T-) verbunden sind und
▪ andererseits mit jeweils einer Phase (U, V, W) der elektrischen Maschine (1) verbunden sind,
- die Koppeleinheiten (6) in Abhängigkeit von Steuersignalen die jeweils zugeordneten Energiespeicherzellen (5) überbrücken oder die jeweils zugeordneten Energiespeicherzellen (5) in den jeweiligen Energieversorgungszweig (3-1, 3-2; 3-3) schalten, und
- eine externe Energiequelle (10) einerseits mit einem Sternpunkt (S) der elektrischen Maschine (1) und andererseits mit der Bezugsschiene (T-) verbunden ist.

2. System nach Anspruch 1, wobei die externe Energiequelle (10) als Stromquelle (10') ausgestaltet ist.

3. System nach Anspruch 1, wobei die externe Energiequelle (10) als Spannungsquelle (10") ausgestaltet ist, deren Spannungswert unterhalb der Spannungen der Energieversorgungszweige (3) liegt und die Koppeleinheiten (6) in Verbindung mit Motorinduktivitäten (8-U, 8-V, 8-W) der elektrischen Maschine (1) als Hochsetzsteller betreibbar sind.

4. System nach Anspruch 3, wobei zwischen die Energiequelle (10) und den Sternpunkt (S) der elektrischen Maschine (1) eine zusätzliche Ladeinduktivität geschaltet ist.

5. System nach einem der Ansprüche 1 bis 4, wobei der steuerbare Energiespeicher (2) mindestens zwei parallele Energieversorgungszweige (3-1, 3-2, 3-3) aufweist, eine Verteilung eines durch die Energiequelle (10) eingespeisten Stromes auf die Energieversorgungszweige (3-1, 3-2, 3-3) über die Spannungen der Energieversorgungszweige (3-1, 3-2, 3-3) einstellbar ist und die Spannungen der Energieversorgungszweige (3-1, 3-2, 3-3) durch die Anzahl der in den jeweiligen Energieversorgungszweig (3-1; 3-2; 3-3) geschalteten Energiespeicherzellen (5) festgelegt ist.

6. System nach einem der Ansprüche 2 bis 5, wobei die Energiequelle (10) als Gleichstromquelle (10') bzw. Gleichspannungsquelle (10") ausgestaltet ist.

7. System nach einem der Ansprüche 2 bis 5, wobei die Energiequelle (10) als Wechselstromquelle (10') bzw. Wechselspannungsquelle (10") und die Koppeleinheiten (6) als Vollbrücken ausgestaltet sind.

8. Verfahren zum Betreiben eines Ladesystems nach einem der Ansprüche 1 bis 7, wobei Energiespeicherzellen (5) in allen Energieversorgungszweigen (3-1, 3-2, 3-3) gleichzeitig geladen werden.

## Claims

1. System for charging at least one energy storage cell (5) in a controllable energy store (2) which serves to control and to supply electrical energy to an n-phase electrical machine (1), where n ≥ 1, **characterized in that**
- the controllable energy store (2) has n parallel energy supply branches (3-1, 3-2, 3-3) which
• each have at least two energy storage modules (4) which are connected in series and which each comprise at least one electrical energy storage cell (5) with an associated controllable coupling unit (6),
• are connected to a reference rail (T-) at one end, and
• are connected to in each case one phase (U, V, W) of the electrical machine (1) at the other end,
- the coupling units (6), depending on control signals, bridge the respectively associated energy storage cells (5) or connect the respectively associated energy storage cells (5) into the respective energy supply branch (3-1, 3-2, 3-3), and
- an external energy source (10) is connected to a star point (S) of the electrical machine (1) at one end and to the reference rail (T-) at the other end.

2. System according to Claim 1, wherein the external energy source (10) is designed as a current source (10').

3. System according to Claim 1, wherein the external energy source (10) is designed as a voltage source (10"), the voltage value of the said voltage source being below the voltages of the energy supply branches (3), and the coupling units (6) can be operated as step-up converters in conjunction with motor inductances (8-U, 8-V, 8-W) of the electrical machine (1).

4. System according to Claim 3, wherein an additional charging inductance is connected between the energy source (10) and the star point (S) of the electrical machine (1).

5. System according to one of Claims 1 to 4, wherein the controllable energy store (2) has at least two parallel energy supply branches (3-1, 3-2, 3-3), a distribution of a current, which is fed by the energy source (10), between the energy supply branches (3-1, 3-2, 3-3) can be adjusted using the voltages of the energy supply branches (3-1, 3-2, 3-3), and the voltages of the energy supply branches (3-1, 3-2, 3-3) are defined by the number of energy storage cells (5) which are connected into the respective energy supply branch (3-1; 3-2; 3-3).

6. System according to one of Claims 2 to 5, wherein the energy source (10) is designed as a direct current source (10') or as a DC voltage source (10").

7. System according to one of Claims 2 to 5, wherein the energy source (10) is designed as an alternating current source (10') or an AC voltage source (10"), and the coupling units (6) are designed as fullbridges.

8. Method for operating a charging system according to one of Claims 1 to 7, wherein energy storage cells (5) are charged simultaneously in all of the energy supply branches (3-1, 3-2, 3-3).

## Revendications

1. Système de charge d'au moins une cellule d'accumulateur d'énergie (5) dans un accumulateur d'énergie (2) pouvant être commandé, qui sert à commander et à alimenter en énergie électrique une machine électrique à n-phases (1), avec n ≥ 1, **caractérisé en ce que**
- l'accumulateur d'énergie pouvant être commandé (2) présente n branches d'alimentation électrique parallèles (3-1, 3-2, 3-3), qui
▪ présentent respectivement au moins deux modules d'accumulateur d'énergie (4) branchés en série, qui comprennent respectivement au moins une source d'accumulateur d'énergie électrique (5) avec une unité de couplage (6) pouvant être commandée coordonnée,
▪ sont reliées d'un côté avec un rail de référence (T-) et
▪ sont reliées d'un autre côté avec respectivement une phase (U, V, W) de la machine électrique (1),
- les unités de couplage (6) pontent en fonction des signaux de commande les cellules d'accumulateur d'énergie (5) respectivement coordonnées ou branchent les cellules d'accumulateur d'énergie (5) coordonnées respectives à la branche d'alimentation électrique respective (3-1, 3-2 ; 3-3), et
- une source d'énergie électrique externe (10) est reliée d'un côté avec un point de neutre (S) de la machine électrique (1) et d'un autre côté avec le rail de référence (T-).

2. Système selon la revendication 1, dans lequel la source d'énergie externe (10) est conçue comme une source d'électricité (10').

3. Système selon la revendication 1, dans lequel la source d'énergie externe (10) est conçue comme une source de tension (10"), dont la valeur de tension est située au-dessous des tensions des branches d'alimentation électrique (3) et les unités de couplage (6) peuvent être exploitées comme convertisseur élévateur en liaison avec les inductances de moteur (8-U, 8-V, 8-W) de la machine électrique (1).

4. Système selon la revendication 3, dans lequel entre la source d'énergie électrique (10) et le point de neutre (S) de la machine électrique (1) une inductance de charge supplémentaire est branchée.

5. Système selon une des revendications 1 à 4, dans lequel l'accumulateur d'énergie pouvant être commandé (2) présente au moins deux branches d'alimentation électrique parallèles (3-1, 3-2, 3-3), une distribution d'un courant alimenté par la source d'énergie (10) sur les branches d'alimentation électrique (3-1, 3-2, 3-3) peut être réglée par l'intermédiaire des tensions des branches d'alimentation électrique (3-1, 3-2, 3-3) et les tensions des branches d'alimentation électrique (3-1, 3-2, 3-3) sont déterminées par le nombre de cellules d'accumulateur d'énergie (5) branchées dans la branche d'alimentation électrique respective (3-1 ; 3-2 ; 3-3).

6. Système selon une des revendications 2 à 5, dans lequel la source d'énergie (10) est conçue comme une source de courant continu (10'), respectivement une source de tension continue (10").

7. Système selon une des revendications 2 à 5, dans lequel la source d'énergie (10) est conçue comme une source de courant alternatif (10'), respectivement une source de tension alternative (10") et les unités de couplage (6) comme des ponts intégraux.

8. Procédé d'exploitation d'un système de charge selon une des revendications 1 à 7, dans lequel des cellules d'accumulateur d'énergie (5) sont chargées simultanément dans toutes les branches d'alimentation électrique (3-1, 3-2, 3-3).
